# EUROPEAN PATENT SPECIFICATION

(11) **EP 0 542 275 B1**
(45) Date of publication and mention of the grant of the patent: **18.06.1997**
(21) Application number: 92119382.7
(22) Date of filing: 12.11.1992
(51) Int. Cl.: H04N 1/00

(54) **A facsimile apparatus incorporating a cordless telephone set that can process an image signal from a remote unit**
Faksimilegerät mit schnurlosem Telefonapparat geeignet zur Verarbeitung eines Bildsignals einer entfernten Einheit
Appareil de fac-similé avec poste téléphonique sans fil pouvant traiter un signal d'image provenant d'une unité délocalisée

(30) Priority: 14.11.1991 JP 299252/91
(43) Date of publication of application: 19.05.1993
(73) Proprietor: SHARP KABUSHIKI KAISHA, Osaka-shi Osaka-fu (JP)
(72) Inventor: Ohbatake, Masami, Higashihiroshima-shi, Hiroshima-ken (JP); Takenaka, Takashi, Higashihiroshima-shi, Hiroshima-ken (JP)
(74) Representative: Müller, Frithjof E., Dipl.-Ing.

(56) References cited:
- EP-A- 0 416 598
- EP-A- 0 455 157
- DE-A- 3 237 239
- INTERNATIONAL CONFERENCE ON COMMUNICATIONS vol. 3, 10 June 1979, BOSTON, MA pages 37.7.1 - 37.7.5 MAEDA ET AL. 'A FACSIMILE LSI MODEM FOR AM-FM VSB'

## Description

### BACKGROUND OF THE INVENTION

### Field of the Invention

The present invention relates to a facsimile apparatus incorporating a cordless telephone set. Such a facsimile apparatus is known, for example from EP-A-0 455 157.

### Description of the Background Art

In a conventional facsimile apparatus, it was necessary to first read out an original with a scanner in copying or transmitting by facsimile a book or an original of many pages. A scanner is connected to the main body of the facsimile, whereby the image (including characters) read out by the scanner was transmitted directly or after copy.

When a scanner and the main body of the facsimile is connected via cable in a conventional facsimile apparatus, copy or transmission cannot be carried out unless the scanner is positioned in the proximity of the main body of the facsimile. In the case of optical communication between a scanner and a main body of the facsimile, copy or transmission cannot be carried out if the scanner is not positioned within a range where the main body of the facsimile can be seen.

The facsimile apparatus which is known from EP-A-0 455 157 relates to a cordless facsimile apparatus having a parent machine connected to the telephone line and the facsimile apparatus connected to the parent machine by wireless connecting means. The facsimile apparatus has both the reading means and the printing means which are fixed therein but are not detachably connected.

Further, a facsimile apparatus is known from EP-A-0 416 598 which discloses a structure wherein a remote unit of a cordless telephone can be connected to a facsimile apparatus. There, the facsimile apparatus is comprised in the base unit and includes fixed printer and reader units.

### SUMMARY OR THE INVENTION

An object of the present invention is to enable transmission or copy of an original image in a facsimile apparatus even when a scanner and the facsimile apparatus are positioned at a distance.

Another object of the present invention is to enable transmission or copy of an original image in a facsimile apparatus even when a scanner and a facsimile apparatus is positioned out of a range that each can be seen.

A further object of the present invention is to enable transmission or copy of an original image in a facsimile apparatus having a cordless telephone set where a scanner and the main body of the facsimile is connected by optical communication even when not in a range where the main body of a facsimile is seen.

Still another object of the present invention is to enable transmission and copy of an original image in a facsimile apparatus incorporating a cordless telephone set where the scanner and the main body of the facsimile apparatus are connected by a cable even when a facsimile apparatus and a scanner are positioned at a distance.

The above objects of the present invention can be achieved by a facsimile apparatus having the features specified in the independent claim 1. That is to say, the facsimile apparatus according to the present invention includes a cordless telephone set capable of transmission/reception between a base unit and a remote unit, and an image processing unit for carrying out image processing of an original. The remote unit of a cordless telephone set includes a reading unit for reading an original, a connecting unit for connecting the reading unit with the remote unit, and a transmission unit for transmitting to the base unit of the cordless telephone set the image signal read out by the reading unit. The base unit includes a transfer unit for transferring the image signal transmitted from the remote unit to the image processing unit.

Because the reading unit is connected to the remote unit of the cordless telephone set and the image signal transmitted from the remote unit of the cordless telephone set is processed by the image processing unit of the facsimile apparatus, the image read out via the remote unit is processed by the main body of the facsimile apparatus. As a result, transmission or copy of an original image can be carried out even if the scanner reading out the original image is distant from the main body of the apparatus in a facsimile apparatus.

Depending claims 2 to 7 are each specifying advantageous embodiments.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of a facsimile incorporating a base unit of a cordless telephone.

Fig. 2 is a block diagram of a structure of coupling the remote unit of a cordless telephone with a scanner by optical communication.

Fig. 3 is a block diagram showing a structure of connecting the remote unit of a cordless telephone with a scanner by cable.

Figs. 4(a) and (b) are perspective views of a structure of connecting a remote unit of a cordless telephone with a scanner in a mechanical manner.

Fig. 5 is a block diagram showing in details the interface circuit and the optical transmission circuit shown in Fig. 2.

Fig. 6 is a block diagram showing in details the RF circuit of the remote unit side shown in Figs. 2-4.

Fig. 7 is a block diagram showing in details the RF block shown in Fig. 1.

Fig. 8 is a block diagram showing in details the interface circuits 24 and 28 of Fig. 3.

### DESCRIPTION OF THE PREFERRED EMBODIMENTS

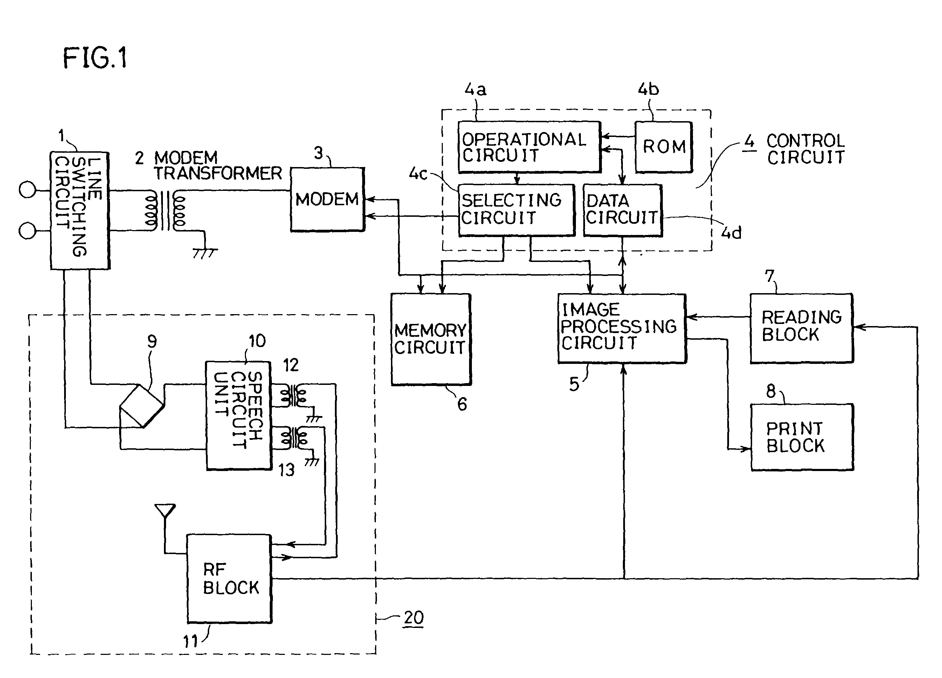

Referring to Fig. 1, a line switching circuit 1 switches the telephone line to the side of the modem 3 of the facsimile or to the side of the incorporated base unit of a cordless telephone. A modem transformer 2 separates the line from the modem 3. A control circuit 4 includes an operation circuit 4a, a ROM 4b incorporating a program for operating the control circuit 4 connected thereto, a selecting circuit 4c connected to the operation circuit 4a for activating the operation of a peripheral circuit, and a data circuit 4d connected to the operation circuit 4a for data transmission with the peripheral circuit. An image processing circuit 5 is connected to the selecting circuit 4c and the data circuit 4d, and to the memory circuit 6, a reading block 7 for reading out a transmitted original, and a print block 8 for printing out received data.

A base unit block 20 of the incorporated cordless telephone includes a diode bridge circuit 9 for guarding polarity, a speech circuit unit 10 which is a 2 line-4 line converting circuit, a transmission transformer 12, a reception transformer 13, and a RF (radio frequency) block 11. The RF block 11 is also connected to the image processing circuit 5 and to the reading block 7.

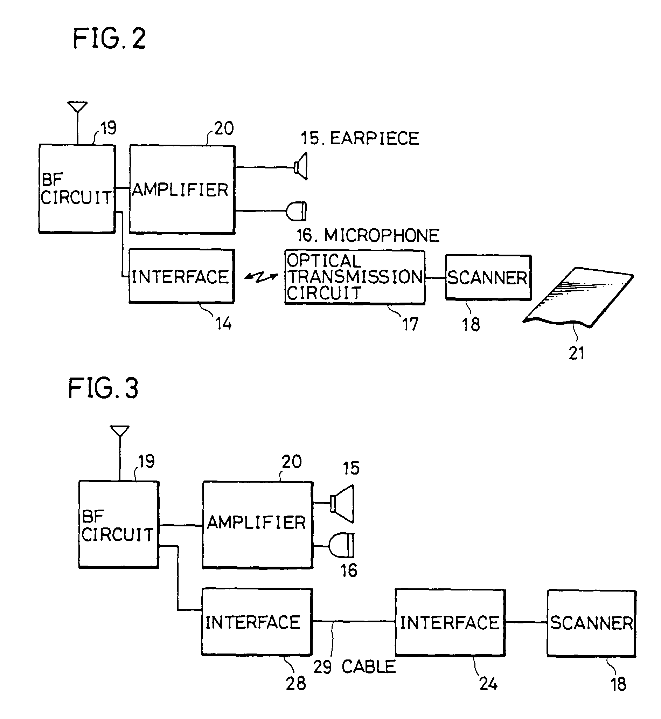

Fig. 2 is a block diagram showing the component elements where the remote unit of a cordless telephone used in the present invention is connected to a scanner by optical communication. Referring to Fig. 2, an RF circuit 19 of the remote unit of the cordless telephone is connected to an ear piece 15 and a microphone 16 via an amplifier 20 for voice communication. An interface circuit 14 carries out photoelectric conversion of image data read out by a scanner 18 and transmitted via an optical transmission circuit 17. The optical transmission circuit 17 transmits optically the image data of an original 21 read out by the scanner 18 to the remote unit of the cordless telephone.

Fig. 3 is a block diagram showing a structure of connecting the scanner 18 with a remote unit of the cordless telephone by a cable. The RF circuit 19, the amplifier 20, the ear piece 15, and the microphone 16 are similar to those shown in Fig. 2. An interface circuit 28 receives image data read out by the scanner 18 via an interface circuit 24 at the side of the scanner 18 and a cable 29.

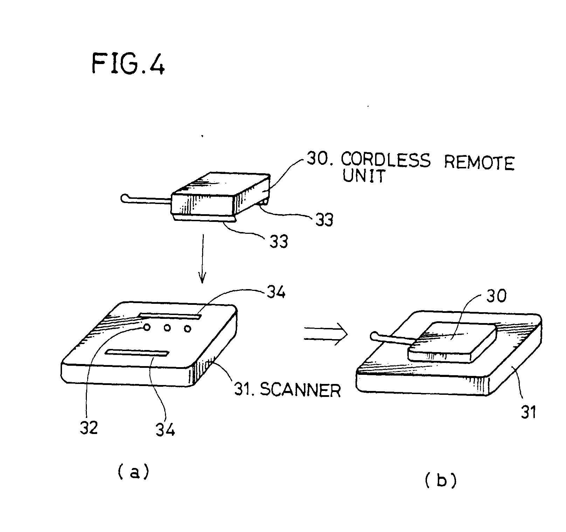

Fig. 4 is a perspective view showing a structure where a remote unit of a cordless telephone is coupled to a scanner in a mechanical manner. The remote unit 30 of a cordless telephone and a scanner 31 are coupled by an appropriate method as shown in Fig. 4(a) where projections 33, 33 of the remote unit 30 of the cordless telephone are engaged in grooves 34, 34 of the scanner 31 so that a terminal 32 of the scanner 31 is in contact with a terminal not shown at the backside of the remote unit 30 of the cordless telephone.

In Fig. 1, when normal facsimile transmission is carried out, an original is read out by a reading block 7. Image data that is subjected to photoelectric conversion is binarized at the image processing circuit 5 to be transmitted to the data circuit 4d via the memory circuit 6 to be data-compressed at the operation circuit 4a to enter the modem 3 via the data circuit 4d again. The data is analog-modulated in the modem 3 to be transmitted to the telephone line as image data through the modem transformer 2.

At this time, the line switching circuit 1 connects the telephone line and the modem transformer 2.

In copy operation, an original is read out by the reading block 7, whereby the photoelectrical converted image data is binarized at the image processing circuit 5. The image processing circuit 5 controls the printing block 8 to copy the image data.

Voice communication between the base unit and the remote unit of the cordless telephone will be described hereinafter.

The audio signal from the remote unit of the cordless telephone to the telephone line received at the RF block 11 passes through the transmission transformer 12, the speech circuit unit 10, and the diode bridge circuit 9 to be output to the telephone line. The received voice from the telephone line enters the RF block 11 via the diode bridge circuit 9, the speech circuit 10, and the reception transformer 13 to be modulated to a radio frequency carrier to be transmitted to the remote unit side of the cordless telephone. In this case, the line switching circuit 1 connects the telephone line with the diode bridge circuit 9.

At the side of the remote unit of the cordless telephone, a normal operation as set forth in the following is carried out. In the case of transmission, referring to Fig. 2, an audio signal from the microphone 16 is amplified by the amplifier 20 and modulated into a radio frequency carrier by the RF circuit 19 to be transmitted to the base unit side of the cordless telephone. In the case of reception, the audio signal modulated to a radio frequency carrier from the base unit side of the cordless telephone is detected in the RF circuit 19 to be demodulated to an audio signal. The demodulated audio signal is amplified by the amplifier 20 to be output from the ear piece 15.

In the case of facsimile transmission, the original 21 is read out by the scanner 18 of Fig. 2. This image data is transmitted to the remote unit side of the cordless telephone via the optical transmission circuit 17 by optical communication using LED, for example. The image data transmitted to the interface 14 has the waveform shaped according to the transmission speed and the frequency characteristic of the telephone set, and then modulated into a radio frequency carrier at the RF circuit 19 to be transmitted to the base unit side of the cordless telephone.

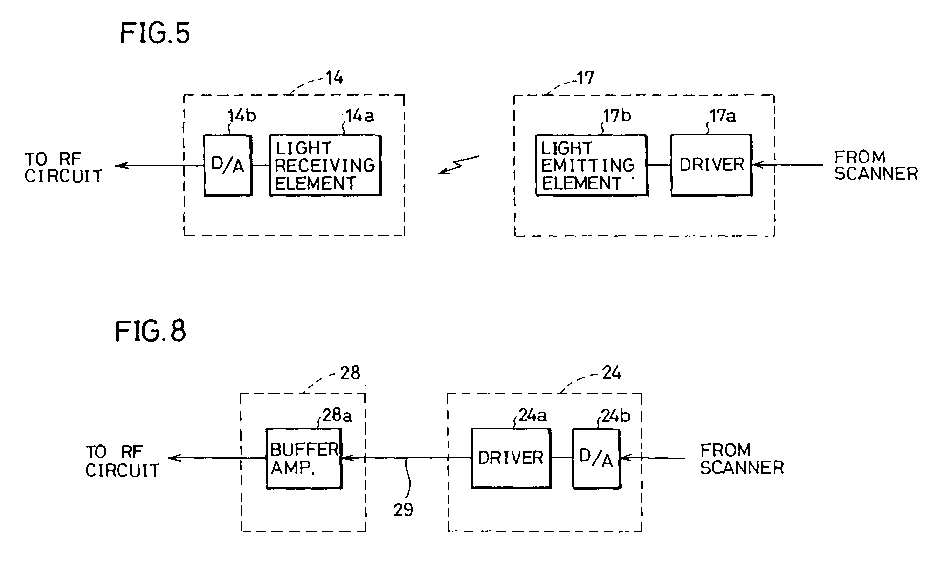

The details of the interface circuit and the RF circuit of the remote unit will be described hereinafter. Fig. 5 is a block diagram showing in details the interface circuit 14 and the optical transmission circuit 17 shown in Fig. 2. Referring to Fig. 5, the optical transmission circuit 17 includes a driver 17a for converting an image data signal from the scanner 18 into an optical signal, and a light emitting element 17b. The transmitted optical signal is converted into an electric signal by a light receiving element 14a. The converted digital signal is converted into an analog signal by the digital/analog converting circuit to be supplied to the RF circuit.

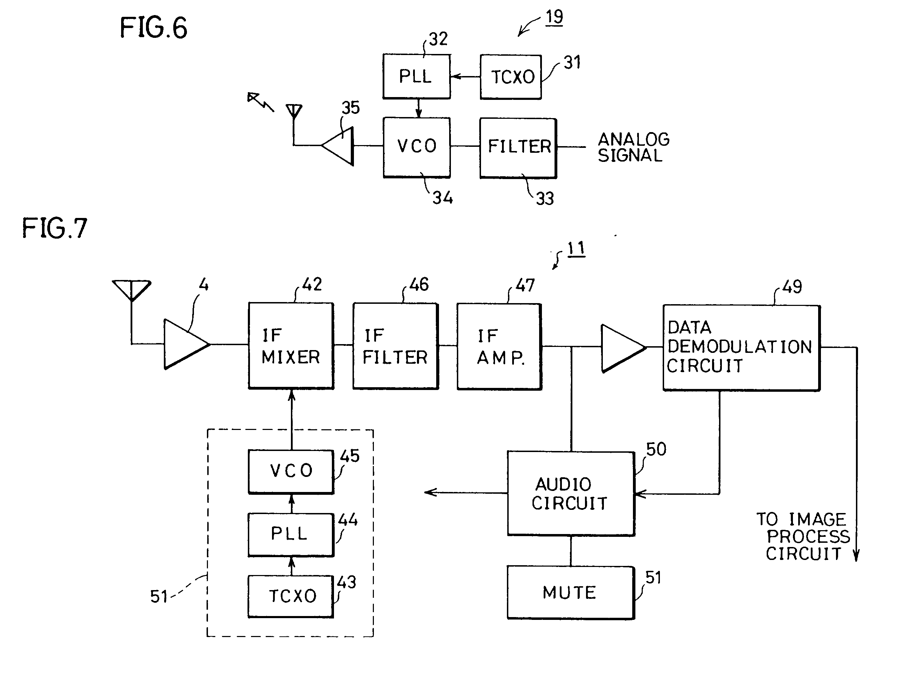

Fig. 6 is a block diagram showing in details the RF circuit 19 of the remote unit side shown in Figs. 2-4. Referring to Fig. 6, the RF circuit 19 includes a filter 33 for removing unnecessary frequency band the image data signal (analog signal) from the interface circuit, a voltage controlled oscillator (VCO) 34 for modulating an image data signal passing through the filter 33, a Phase Locked Loop (PLL) circuit and an oscillating circuit (TCXO: Temperature Compensated Crystal Oscillator) 31 connected to the VCO 34 for setting the transmission frequency, and a RF amplifier 35 for amplifying the modulated image data signal.

The transmitted image data is demodulated by the RF block 11 of Fig. 1 and binarized in the image processing circuit 5 to be stored in the memory circuit 6. The data enters the operation circuit 4a where data compression is carried out via the data circuit 4d to enter the modem 3 via the data circuit 4d again. The data is analog-modulated to be transmitted to the line as facsimile data via the modem transformer 2.

Fig. 7 is a block diagram showing in details the RF block 11 shown in Fig. 1. Referring to Fig. 2, the RF block 11 includes a RF receiving amplifier 41 for amplifying a carrier signal including image data and the like received from the remote unit, a first intermediate frequency (IF) mixer 42 for mixing the amplified signal and the local oscillation generated by the local oscillating circuit 51 for generating an intermediate frequency, a second IF filter 46 for modifying the frequency, an IF amplifier 47 for detecting image data, a comparator 48 for converting an analog signal into a digital signal, a data demodulation circuit 49 for reading out image data, and an audio circuit 50 for providing an audio signal.

The local oscillating circuit 51 includes an oscillating circuit 43, a phase synchronization loop circuit (Phase Locked Loop) 44, and a voltage control oscillator (VCO) 45. The mute circuit 51 is connected to the audio circuit 50. When determination is made that the received signal includes an image signal by the data demodulation circuit 49, the mute circuit 51 operates, so that image data is not transmitted to the audio circuit.

In the case of copy, the image data provided to the base unit side from the remote unit of the cordless telephone is demodulated by the RF block 11 to enter the image processing circuit 5. The printing block 8 is controlled by the image processing circuit 5, whereby the image data read out by the scanner 18 is copied.

The operation in the case where the remote unit of the cordless telephone of Fig. 3 is connected to the scanner by a cable will be described hereinafter.

The image data read out by the scanner 18 is converted into scanner voltage and remote unit cordless telephone voltage by the interface circuit 24. Simultaneously, the transmission speed of the image data is made to conform to the transmission speed of the remote unit of the cordless telephone. For cable 29, a cable that can be easily attached/detached and that does not make difficult the operation of the scanner is used such as a curled code used in a normal telephone set. The image data entered via the cable 29 has its waveform shaped so as to be modulated to a radio frequency carrier in the interface 28 to be subjected to modulation in the RF circuit 19 to be transmitted to the base unit side of the cordless telephone. The image data received at the base unit side of the cordless telephone is processed in a manner similar to that already described with reference to Fig. 1.

The details of the circumference of the interface circuit will be described. Fig. 8 is a block diagram showing in details the interface circuits 24 and 28 of Fig. 3. Referring to Fig. 8, the image signal read out by the scanner 18 is converted into an analog signal by the digital/analog converting circuit 24b to be transmitted to the buffer amplifier 28a provided in the interface circuit 28 of the remote unit via the driver 24a and the cable 29.

The process succeeding the reception with the base unit of the cordless telephone is carried out as described above even in the case where the remote unit of the cordless telephone is coupled to the scanner mechanically as shown in Fig. 4.

Although the foregoing is described in the case where image data is provided from a scanner, data produced by a personal computer or a word processor or data stored in a floppy disk and the like can be read out by the remote unit of a cordless telephone.

In this case, a digital signal from a personal computer, a wordprocessor and the like is entered via the interface circuit 28 instead of the digital signal from the scanner 18 in Fig. 3.

Although the present invention has been described and illustrated in detail, it is clearly understood that the same is by way of illustration and example only and is not to be taken by way of limitation, the scope of the present invention being limited only by the terms of the appended claims.

## Claims

1. A facsimile apparatus including reading means (18) for reading an original, a base unit (20) and a remote unit (14, 15, 16, 19, 20, 30) of a cordless telephone, said base unit capable of transmission/reception with said remote unit, said base unit comprising image processing means (5) for carrying out image processing and fascimile transmission of an original,
wherein the remote unit includes
connecting means (14, 17, 24, 28, 29, 32, 33, 34) for detachably and separately connecting only said reading means (18) with said remote unit, and
transmission means (19) for transmitting the image signal from said reading means (18) according to the read original to said base unit (20), and said base unit further includes:
receiving means (11) for receiving the image signal transmitted from said remote unit and for transferring the signal to said image processing means.

2. The facsimile apparatus according to claim 1, wherein said connecting means comprises optical communication means (14, 17).

3. The facsimile apparatus according to claim 1, wherein said connecting means comprises means for connection using a cable (24, 28, 29).

4. The facsimile apparatus according to claim 1, wherein said connecting means comprises means for mechanical coupling (32, 33, 34).

5. The facsimile apparatus according to one of the claims 1 to 4, wherein said image processing means comprises copy means (5, 8) for copying said original, whereby said original image read out by said reading means is copied by said copy means.

6. The facsimile apparatus according to one of the claims 1 to 4, wherein said image processing means (5) comprises means (4) for converting said image signal into transmission data capable of transmission by said facsimile apparatus via modem.

7. The facsimile apparatus according to one of the claims 1 to 6, wherein said reading means (18) comprises a scanner.

## Revendications

1. Appareil de télécopie comprenant des moyens de lecture (18) pour lire un original, une unité de base (20) et une unité distante (14,15,16,19,20,30) d'un téléphone sans fil, ladite unité de base permettant de réaliser une émission/réception avec ladite unité distante, ladite unité de base comprenant des moyens (5) de traitement d'image pour exécuter un traitement d'image et une transmission par télécopie d'un original, dans lequel l'unité distante comprend
des moyens de connexion (14,17,24,28,29,32,33,34) pour connecter de façon amovible et séparément uniquement lesdits moyens de lecture (18) à ladite unité distante, et
des moyens d'émission (19) pour émettre le signal d'image depuis lesdits moyens de lecture (18) en fonction de l'original lu à ladite unité de base (20), et ladite unité de base comprend en outre :
des moyens de réception (11) pour recevoir le signal d'image émis par ladite unité distante et pour transférer le signal auxdits moyens de traitement d'image.

2. Appareil de télécopie selon la revendication 1, dans lesdits moyens de connexion comprennent des moyens de communication optique (14,17).

3. Appareil de télécopie selon la revendication 1, dans lequel lesdits moyens de connexion comprennent des moyens pour établir une connexion en utilisant un câble (24,28,29).

4. Appareil de télécopie selon la revendication 1, dans lequel lesdits moyens de connexion comprennent des moyens pour réaliser un couplage mécanique (32,33,34).

5. Appareil de télécopie selon l'une des revendications 1 à 4, dans lequel lesdits moyens de traitement d'image comprennent des moyens de copiage (5,8) pour copier ledit original, ladite image originale lue par lesdits moyens de lecture étant copiée par lesdits moyens de copiage.

6. Appareil de télécopie selon l'une des revendications 1 à 4, dans lequel lesdits moyens (5) de traitement d'image comprennent des moyens (4) pour convertir ledit signal d'image en des données d'émission pouvant être émises par ledit appareil de télécopie au moyen d'un modem.

7. Appareil de télécopie selon l'une des revendications 1 à 6, dans lequel lesdits moyens de lecture (18) comprennent un scanner.

## Patentansprüche

1. Faksimilegerät, das eine Leseeinrichtung (18) zum Lesen eines Originals, eine Basiseinheit (20) und eine abgesetzte Einheit (14, 15, 16, 19, 20, 30) eines schnurlosen Telefons enthält, von denen die Basiseinheit zur abgesetzten Einheit senden und von ihr empfangen kann; diese Basiseinheit weist eine Bildverarbeitungseinrichtung (5) auf, die eine Bildverarbeitung und Faksimileübertragung eines Originals ausführt, und die abgesetzte Einheit enthält weiterhin
eine Verbindungseinrichtung (14, 17, 24, 28, 29, 32, 33, 34) zur abnehmbaren und separaten Verbindung der Leseeinrichtung (18) allein mit der abgesetzten Einheit, und
eine Sendeeinrichtung (19), die das Bildsignal von der Leseeinrichtung (18) übereinstimmend mit dem gelesenen Original zur Basiseinheit (20) sendet; und die Basiseinheit weist weiterhin auf:
eine Empfangseinrichtung (11) zum Empfang des von der abgesetzten Einheit gesendeten Bildsignals und zur Übertragung des Signals zur Bildverarbeitungseinrichtung.

2. Faksimilegerät nach Anspruch 1, bei dem die Verbindungseinrichtung optische Kommunikationsmittel (14, 17) aufweist.

3. Faksimilegerät nach Anspruch 1, bei dem die Verbindungseinrichtung Mittel zur Verbindung unter Einsatz eines Kabels (24, 28, 29) aufweist.

4. Faksimilegerät nach Anspruch 1, bei dem die Verbindungseinrichtung Mittel zur mechanischen Kopplung (32, 33, 34) aufweist.

5. Faksimilegerät nach einem der Ansprüche 1 bis 4, bei dem die Bildverarbeitungseinrichtung Kopiermittel (5, 8) zum Kopieren des Originals aufweist, wobei das von der Leseeinrichtung ausgelesene Originalbild von den Kopiermitteln kopiert wird.

6. Faksimilegerät nach einem der Ansprüche 1 bis 4, bei dem die Bildverarbeitungseinrichtung (5) Mittel (4) zur Umsetzung des Bildsignals in Sendedaten aufweist, die durch das Faksimilegerät über einen Modem gesendet werden können.

7. Faksimilegerät nach einem der Ansprüche 1 bis 6, bei dem die Leseeinrichtung (18) einen Scanner aufweist.
